# EUROPEAN PATENT SPECIFICATION

(11) **EP 0 928 804 B1**
(45) Date of publication and mention of the grant of the patent: **30.08.2006**
(21) Application number: 98203479.5
(22) Date of filing: 16.10.1998
(51) Int. Cl.: C08J 5/06, B32B 5/28

(54) **Method for preparing a fabric substantially consisting of carbon fibers**
Verfahren zur Herstellung eines Gewebes im wesentlichen aus Kohlenstofffasern
Procédé pour la fabrication d'un tissu essentiellement constitué de fibres de carbone

(30) Priority: 08.01.1998 NL 1007987
(43) Date of publication of application: 14.07.1999
(73) Proprietor: Ten Cate Advanced Composites B.V., 7443 PV Nijverdal (NL)
(72) Inventor: Lenferink, Robert Gerardus, 7651 RJ Tubbergen (NL); van Dreumel, Wilhelmus Hendrikus Maria, 7441 JD Nijverdal (NL)
(74) Representative: 't Jong, Bastiaan Jacob

(56) References cited:
- EP-A- 0 045 574
- DE-A- 3 024 609
- US-A- 5 212 010
- DATABASE WPI Section Ch, Week 8710 Derwent Publications Ltd., London, GB; Class A21, AN 87-068721 XP002069437 & JP 62 021872 A (TOHO RAYON KK)

## Description

Before glass fibres are formed into a fabric a protective coating is applied to the fibres. This coating is removed after the weaving by subjecting the glass fabric to a high temperature for quite a long time. A typical cycle comprises a temperature of about 400°C for a period of 70 hours. The coating, generally designated as "strong layer", usually consists of PVA (polyvinyl alcohol) or starch. During the heating process the protective coating is completely burned away, which can be easily checked by determining the weight of the fabric before and after the relevant heating treatment. In order to prepare glass fabric for impregnation after the heat treatment, a more suitable coating is added to the glass fibre material for adhesion to plastic systems. Typical materials for coatings are chromium (III) and siloxane complexes.

Lightweight composite materials for structural applications are manufactured by combining carbon fibres with a plastic matrix. For space travel, aviation and industrial applications the plastic is added to the fibres by an impregnation process. If the impregnation process is carried out on a fibre system in which all fibres run substantially parallel to each other, the product in question is designated as unidirectional tape.

Carbon fibres are easily damaged by friction forces. No protection for the carbon fibres is however necessary for the impregnation process for the unidirectional tape since no friction forces occur between the individual fibres.

If however the fibres are combined into a fabric, friction occurs between the fibres during insertion of the filling fibres perpendicularly of the warp fibres. As a result of these friction forces, carbon fibres are easily damaged during the weaving process.

In order to facilitate the weaving process carbon yarns are provided in advance by the supplier with a standard sizing, which consists for instance of 0.5-1% unsaturated epoxy material. This sizing does not have to be removed if the fabric is subsequently impregnated with a curing plastic system. The epoxy-based sizing is compatible with most thermosetting plastic systems. However, for impregnation with a thermoplastic matrix the epoxy sizing does have an adverse effect on the adhesion between fibre and plastic.

For these reasons material impregnated with a thermoplastic has only been made commercially available in the form of unidirectional tape. The manufacturing process of said unidirectional tapes uses fibres which are not provided with a coating or sizing. So as to enable weaving and nevertheless ensure sufficient adhesion between fibres and plastic, the epoxy sizing has to be neutralized after the weaving process.

Much attention has been devoted to this problem and the prior art is still seeking a method of removing or neutralizing the epoxy sizing on carbon fibres after the weaving process and is seeking to find a method to improve the adhesion between carbon and thermoplastic plastic and thus provide a basis for a reliable composite material for structural applications.

With a view to the above, the invention provides a method for preparing a fabric substantially consisting of carbon fibres for impregnation with a thermoplastic plastic, which method comprises the following steps of:
(a) providing a fabric which substantially consists of carbon fibres with a coating of an epoxy material without curer; and
(b) holding the fabric first for (15 ± 5) minutes at a temperature of (450 ± 70)°C and subsequently for (240 ± 60) minutes at a temperature of (220 ± 30)°C. such that the carbon fibres remain unaffected and the epoxy material is aged or neutralized and loses its tacky character. Another method can herein consist of step (b) being performed by holding the fabric for (180 ± 60) minutes at a temperature of (380 ± 50)°C.

In contrast to glass fibre, no additional sizing is added to the fibre material after the described thermal treatment. The epoxy sizing is still present after the thermal treatment, which can be determined by a weight comparison.

Although the epoxy coating is still present, the nature of the coating changes due to this process of artificial thermal ageing. The layer loses the reactivity and stickiness and forms a neutral base for adhesion to a thermoplastic plastic.

After the carbon fibres have been formed into a fabric, this fabric is brought to an increased temperature. This temperature must be high enough to neutralize the tacky epoxy resin and also low enough to ensure that the mechanical properties of the carbon fibres are not adversely affected.

A method in which the coating amounts to roughly 0.3-2% by weight of the fabric provides a very good compromise between the realization of desired effects and the use of relatively little epoxy material.

The invention also relates to a prepared fabric obtained by applying one or other of the above described methods. This fabric consists substantially of carbon fibres with a coating of aged or neutralized epoxy material.

The invention further relates to a method for manufacturing a laminate comprising a number of layers, consisting alternately of a prepared fabric according to the specification given in the previous paragraph and a layer of thermoplastic plastic, which laminate is formed by impregnating at increased temperature each layer of prepared fabric with the material of the layer of thermoplastic plastic, which impregnation takes place at increased temperature and optionally under increased pressure, wherein the layer of thermoplastic plastic can consist of a pre-manufactured foil, a powder-like or granular layer or is formed by co-extrusion.

A specific method herein consists of the thermoplastic plastic being semi-crystalline.

In a determined embodiment the method is performed such that the thermoplastic plastic is PPS (polyphenylene sulphide).

A preferred embodiment of the method for manufacturing a laminate has the special feature that the thermoplastic plastic is PPS (polyphenylene sulphide).

A greatly reduced viscosity facilitates the impregnation process.

The latter described method can advantageously have the special feature that said temperature amounts to (310 ± 30)°C.

The crystalline character of the PPS can be adjusted by a method according to which the formed laminate is guided for cooling purposes over a cooling roller. It is possible to determine from the temperature of this cooling roller whether the thermoplastic plastic, in particular PPS, is amorphous or crystalline or a hybrid form therebetween. At temperatures below 160°C the plastic is predominantly amorphous; above 160°C the plastic is predominantly crystalline.

Finally, the invention relates to a laminate obtained by applying the method according to any of the claims 6-11, and comprising a number of layers consisting alternately of a prepared fabric according to claim 5 and a layer of thermoplastic plastic, which latter layer is impregnated into said prepared fabric.

## Claims

1. Method for preparing a fabric substantially consisting of carbon fibres for impregnation with a thermoplastic plastic, which method comprises the following steps of:
(a) providing a fabric which substantially consists of carbon fibres with a coating of an epoxy material without curer; and
(b) holding the fabric first for (15 ± 5) minutes at a temperature of (450 ± 70)°C and subsequently for (240 ± 60) minutes at a temperature of (220 ± 30)°C such that the carbon fibres remain unaffected and the epoxy material is aged or neutralized and loses its tacky character.

2. Method for preparing a fabric substantially consisting of carbon fibres for impregnation with a thermoplastic plastic, which method comprises the following steps of:
(a) providing a fabric which substantially consists of carbon fibres with a coating of an epoxy material without curer; and
(b) by holding the fabric for (180 ± 60) minutes at a temperature of (380 ± 50)°C such that the carbon fibres remain unaffected and the epoxy material is aged or neutralized and loses its tacky character.

3. Method as claimed in claim 1 or 2, wherein the coating amounts to roughly 0.3-2% by weight of the fabric.

4. Prepared fabric obtained by applying the method as claimed in any of the foregoing claims, which fabric consists substantially of carbon fibres with a coating of aged or neutralized epoxy material.

5. Method for manufacturing a laminate comprising a number of layers, consisting alternately of a prepared fabric as claimed in claim 3 and a layer of thermoplastic plastic, which laminate is formed by impregnating each layer of prepared fabric with the material of the layer of thermoplastic plastic, which impregnation takes place at increased temperature and optionally under increased pressure, wherein the layer of thermoplastic plastic can consist of a pre-manufactured foil, a powder-like or granular layer or is formed by co-extrusion.

6. Method as claimed in claim 5, wherein the thermoplastic plastic is semi-crystalline.

7. Method as claimed in claim 5, wherein the thermoplastic plastic is PPS (polyphenylene sulphide).

8. Method as claimed in claims 5 and 7, wherein the laminate is formed at a temperature at which the PPS material has a greatly reduced viscosity, for instance a viscosity comparable to the viscosity of water, for instance with a value in the range of 75-210 Pa.s.

9. Method as claimed in claim 8, wherein said temperature amounts to (310 ± 30)°C.

10. Method as claimed in claim 8, wherein the formed laminate is guided for cooling purposes over a cooling roller.

11. Laminate obtained by applying the method as claimed in any of the claims 5-10, and comprising a number of layers consisting alternately of a prepared fabric as claimed in claim 4 and a layer of thermoplastic plastic, which latter layer is impregnated into said prepared fabric.

## Patentansprüche

1. Verfahren zur Vorbereitung eines im Wesentlichen aus Kohlefasern bestehenden Gewebes für eine Imprägnierung mit einem thermoplastischen Kunststoff, wobei das Verfahren die folgenden Schritte aufweist:
(a) Versehen eines im Wesentlichen aus Kohlefasern bestehenden Gewebes mit einer Beschichtung aus einem Epoxidmaterial ohne Härter; und
(b) Halten des Gewebes zu erst für (15 ± 5) Minuten bei einer Temperatur von (450 ± 70)°C und nachfolgend für (240 ± 60) Minuten bei einer Temperatur von (220 ± 30)°C, so dass die Kohlefasern unbeeinflusst bleiben und das Epoxidmaterial aushärtet oder neutralisiert wird und seine klebrige Beschaffenheit verliert.

2. Verfahren zur Vorbereitung eines im Wesentlichen aus Kohlefasern bestehenden Gewebes für eine Imprägnierung mit einem thermoplastischen Kunststoff, wobei das Verfahren die folgenden Schritte aufweist:
(a) Versehen eines im Wesentlichen aus Kohlefasern bestehenden Gewebes mit einer Beschichtung aus einem Epoxidmaterial ohne Härter; und
(b) durch Halten des Gewebes für (180 ± 60) Minuten bei einer Temperatur von (380 ± 50)°C so, dass die Kohlefasern unbeeinflusst bleiben und das Epoxidmaterial aushärtet oder neutralisiert wird und seine klebrige Beschaffenheit verliert.

3. Verfahren gemäß Anspruch 1 oder 2, wobei die Beschichtung ungefähr 0,3-2% des Gewichts des Gewebes ausmacht.

4. Vorbereitetes Gewebe, gewonnen durch Anwendung des Verfahrens gemäß einem der vorhergehenden Ansprüche, wobei das Gewebe im Wesentlichen aus Kohlefasern mit einer Beschichtung aus ausgehärtetem oder neutralisiertem Epoxidmaterial besteht.

5. Verfahren zur Herstellung eines Laminats, das eine Anzahl von Lagen aufweist, die abwechselnd aus einem vorbereiteten Gewebe gemäß Anspruch 3 und einer Lage thermoplastischen Kunststoffes besteht, wobei das Laminat durch Imprägnieren jeder Lage des vorbereiteten Gewebes mit dem Material der Lage aus thermoplastischem Kunststoff gebildet wird, wobei die Imprägnierung bei erhöhter Temperatur und optional unter erhöhtem Druck stattfindet, wobei die Lage aus thermoplastischem Kunststoff aus einer vorgefertigten Folie, einer pulverähnlichen oder körnigen Lage bestehen kann oder durch Coextrusion gebildet wird.

6. Verfahren gemäß Anspruch 5, wobei der thermoplastische Kunststoff teilkristallin ist.

7. Verfahren gemäß Anspruch 5, wobei der thermoplastische Kunststoff PPS (Polyphenylensulfid) ist.

8. Verfahren gemäß einem der Ansprüche 5 und 7, wobei das Laminat bei einer Temperatur gebildet wird, bei der das PPS-Material eine stark reduzierte Viskosität aufweist, zum Beispiel eine Viskosität vergleichbar zu der Viskosität von Wasser, beispielsweise mit einem Wert in dem Bereich von 75-210 Pa.s.

9. Verfahren gemäß Anspruch 8, wobei die Temperatur um die (310 ± 30)°C beträgt.

10. Verfahren gemäß Anspruch 8, wobei das gebildete Laminat für Kühlzwecke über eine Kühlwalze geführt wird.

11. Laminat, erhalten durch Anwendung des Verfahrens gemäß einem der Ansprüche 5 bis 10 und aufweisend eine Anzahl von Lagen, die abwechselnd aus einem vorbereiteten Gewebe gemäß Anspruch 4 und einer Lage von thermoplastischem Kunststoff besteht, wobei die letztere Lage in das vorbereitete Gewebe imprägniert ist.

## Revendications

1. Procédé de préparation d'un tissu essentiellement constitué de fibres de carbone destiné à être imprégné avec un plastique thermoplastique, lequel procédé comprend les étapes suivantes de :
(a) produire un tissu qui est essentiellement constitué de fibres de carbone avec un revêtement d'un matériau époxy sans agent de vulcanisation ; et
(b) maintenir le tissu d'abord pendant (15±5) minutes à une température de (450 ± 70)°C et ensuite pendant (240 ± 60) minutes à une température de (220 ± 30)°C de telle sorte que les fibres de carbone restent non affectées et que le matériau époxy soit maturé ou neutralisé et perde son caractère collant.

2. Procédé de préparation d'un tissu essentiellement constitué de fibres de carbone destiné à être imprégné avec un plastique thermoplastique, lequel procédé comprend les étapes suivantes de :
(a) produire un tissu qui est essentiellement constitué de fibres de carbone avec un revêtement d'un matériau époxy sans agent de vulcanisation ; et
(b) maintenir le tissu pendant (180 ± 60) minutes à une température de (380 ± 50)°C de telle sorte que les fibres de carbone restent non affectées et que le matériau époxy soit maturé ou neutralisé et perde son caractère collant.

3. Procédé selon la revendication 1 ou 2, dans lequel les quantités de revêtement atteignent grossièrement 0,3 à 2 % en poids du tissu.

4. Tissu préparé obtenu en appliquant le procédé selon l'une quelconque des revendications précédentes, lequel tissu est constitué essentiellement de fibres de carbone avec un revêtement de matériau époxy maturé ou neutralisé.

5. Procédé de fabrication d'un stratifié comprenant un certain nombre de couches, constituées alternativement d'un tissu préparé selon la revendication 3 et d'une couche de plastique thermoplastique, lequel stratifié est formé en imprégnant chaque couche de tissu préparé avec le matériau de la couche de plastique thermoplastique, laquelle imprégnation survient à une température ascendante et éventuellement sous pression ascendante, dans lequel la couche de plastique thermoplastique peut comporter une feuille préalablement fabriquée, une couche granuleuse ou poudreuse ou est formée par co-extrusion.

6. Procédé selon la revendication 5, dans lequel le plastique thermoplastique est semi-cristallin.

7. Procédé selon la revendication 5, dans lequel le plastique thermoplastique est le polysulfure de phénylène (PPS).

8. Procédé selon les revendications 5 et 7, dans lequel le stratifié est formé à une température à laquelle le matériau PPS a une viscosité extrêmement réduite, par exemple une viscosité comparable à la viscosité de l'eau, par exemple d'une valeur comprise dans la fourchette de 75 à 210 Pa.s.

9. Procédé selon la revendication 8, dans lequel ladite température s'élève à (310 ± 30)°C.

10. Procédé selon la revendication 8, dans lequel le stratifié formé est dirigé en vue d'être refroidi sur un cylindre de refroidissement.

11. Stratifié obtenu en appliquant le procédé selon l'une quelconque des revendications 5 à 10, et comprenant un certain nombre de couches constituées alternativement d'un tissu préparé selon la revendication 4 et d'une couche de plastique thermoplastique, cette dernière couche étant imprégnée dans ledit tissu préparé.
